# EUROPÄISCHE PATENTSCHRIFT

(11) **EP 1 557 049 B1**
(45) Veröffentlichungstag und Bekanntmachung des Hinweises auf die Patenterteilung: **04.07.2012**
(21) Anmeldenummer: 03770969.8
(22) Anmeldetag: 10.10.2003
(51) Int. Cl.: H04Q 1/14

(54) **VERTEILEREINRICHTUNG EINER TELEKOMMUNIKATIONSANLAGE SOWIE SCHUTZEINRICHTUNG FÜR EINE VERTEILEREINRICHTUNG**
DISTRIBUTION SYSTEM FOR TELECOMMUNICATION INSTALLATION AND PROTECTIVE SYSTEM FOR A DISTRIBUTION SYSTEM
SYSTEME DE DISTRIBUTION POUR INSTALLATION DE TELECOMMUNICATION ET SYSTEME DE PROTECTION POUR SYSTEME DE DISTRIBUTION

(30) Priorität: 14.10.2002 DE 10247871
(43) Veröffentlichungstag der Anmeldung: 27.07.2005
(73) Patentinhaber: CCS Technology, Inc., Wilmington, DE 19803 (US)
(72) Erfinder: MATTHIES, Jürgen, 58455 Witten (DE)
(74) Vertreter: Sturm, Christoph
(86) Internationale Anmeldenummer: PCT/EP2003/011255
(87) Internationale Veröffentlichungsnummer: WO 2004/036927

(56) Entgegenhaltungen:
- WO-A-97/36467
- DE-A- 3 921 227
- DE-A- 19 912 522
- GB-A- 2 338 612

## Beschreibung

Die Erfindung betrifft eine Verteilereinrichtung einer Telekommunikationsanlage gemäß dem Oberbegriff des Anspruchs 1. Des Weiteren betrifft die Erfindung eine Schutzeinrichtung für eine solche Verteilereinrichtung gemäß dem Oberbegriff des Anspruchs 7.

Verteilereinrichtungen sind aus dem Stand der Technik hinlänglich bekannt. So zeigt zum Beispiel die DE 199 12 522 C2 eine Verteilereinrichtung einer Telekommunikationsanlage. Bei der dort offenbarten Verteilereinrichtung handelt es sich um einen sogenannten Verteilerblock, in dem sandwichartig mehrere Verteilerleisten übereinander angeordnet sind. Jede Verteilerleiste, auch Kontaktleiste genannt, umfasst mehrere Verteilerelemente, auch Kontaktelemente genannt. Aus diesem Stand der Technik ist es bekannt, jede Verteilerleiste des Verteilerblocks mit Hilfe einer als Schutzmagazin ausgebildeten Schutzeinrichtung vor Überspannungen und/oder Überströmen zu schützen, wobei die Schutzmagazine von hinten bzw. seitlich von hinten in die Verteilerleisten eingesteckt werden. Hierdurch bleiben Schneidklemmen der Verteilerelemente für Rangierarbeiten an ankommenden und abgehenden Leitungen frei zugänglich. Bei der in der DE 199 12 522 C2 gezeigten Verteilereinrichtung werden also alle Verteilerelemente einer Verteilerleiste gleichzeitig über ein Schutzmagazin vor Überspannungen und/oder Überströmen geschützt. Da das Schutzmagazin von hinten bzw. seitlich von hinten in die jeweilige Verteilerleiste eingesteckt wird, ist eine gewisse Einbautiefe und damit ein gewisser Platzbedarf erforderlich.

Die GB 2,338,612 A1 offenbart eine Verteilerleiste mit einem von vorne in die Verteilerleiste einschiebbaren Stecker, wobei in die Verteilerleiste eine Erdungseinrichtung integriert ist, mit welcher der in die Verteilerleiste eingesteckte Stecker kontaktiert werden kann.

Bei Verteilereinrichtungen, die unter beengten Platzverhältnissen eingesetzt werden müssen, werden Schutzeinrichtungen meist von vorne in ein Verteilerelement oder eine Verteilerleiste eingesteckt. Bei von vorne einzusteckenden Schutzeinrichtungen handelt es sich meist um solche Schutzeinrichtungen, mit denen nicht alle Verteilerelemente einer Verteilerleiste - meist sind acht oder zehn Verteilerelemente in einer Verteilerleiste zusammengefasst - vor Überspannungen und/oder Überströmen geschützt werden, sondern meist nur ein einzelnes Verteilerelement oder eine Gruppe aus zwei oder vier Verteilerelementen. Um bei von vorne zu steckenden Schutzeinrichtungen den erforderlichen Kontakt zum Erdpotential bzw. Massepotential zu gewährleisten, wird nach dem Stand der Technik ein Erdungsbügel eingesetzt, der ebenfalls von vorne auf der Verteilereinrichtung montiert wird und mit dem die Schutzeinrichtung kontaktiert wird. Eine solche Vorgehensweise ist einerseits konstruktiv aufwändig und zum anderen stört der Erdungsbügel bei Rangierarbeiten an ankommenden und abgehenden Leitungen.

Hiervon ausgehend liegt der vorliegenden Erfindung das Problem zu Grunde, eine neuartige Verteilereinrichtung einer Telekommunikationsanlage und eine neuartige Schutzeinrichtung für eine solche Verteilereinrichtung zu schaffen.

Dieses Problem wird durch eine Verteilereinrichtung mit den Merkmalen des Anspruchs 1 gelöst. Die erfindungsgemäße Schutzeinrichtung ist durch die Merkmale des Anspruchs 7 gekennzeichnet.

Erfindungsgemäß ist an der Rückwand des Trägerteils mindestens eine Erdungseinrichtung angeordnet, in welche eine von der Vorderseite in eine Verteilerleiste einschiebbare Schutzeinrichtung nach dem Einschieben derselben eingreift. Hierdurch ist es möglich, auf einen nach dem Stand der Technik erforderlichen Erdungsbügel zu verzichten.

Bevorzugte Weiterbildungen der Erfindung ergeben sich aus den Unteransprüchen und der nachfolgenden Beschreibung. Ausführungsbeispiele werden anhand der Zeichnung näher erläutert. In der Zeichnung zeigt:
- Fig. 1: eine Verteilereinrichtung einer Telekommunikationsanlage nach dem Stand der Technik in perspektivischer Seitenansicht,
- Fig. 2: eine weitere Verteilereinrichtung einer Telekommunikationsanlage nach dem Stand der Technik in perspektivischer Seitenansicht,
- Fig. 3: eine Verteilereinrichtung einer Telekommunikationsanlage im Sinne der Erfindung mit einer teilweise in die Verteilereinrichtung eingeführten, erfindungsgemäßen Schutzeinrichtung im Querschnitt,
- Fig. 4: die Anordnung gemäß Fig. 3 mit einer weiter eingeschobenen Schutzeinrichtung,
- Fig. 5: die Anordnung gemäß Fig. 3 und 4 mit einer vollständig eingeschobenen Schutzeinrichtung, und
- Fig. 6:: ein vergrößertes Detail aus der Anordnung gemäß Fig. 5.

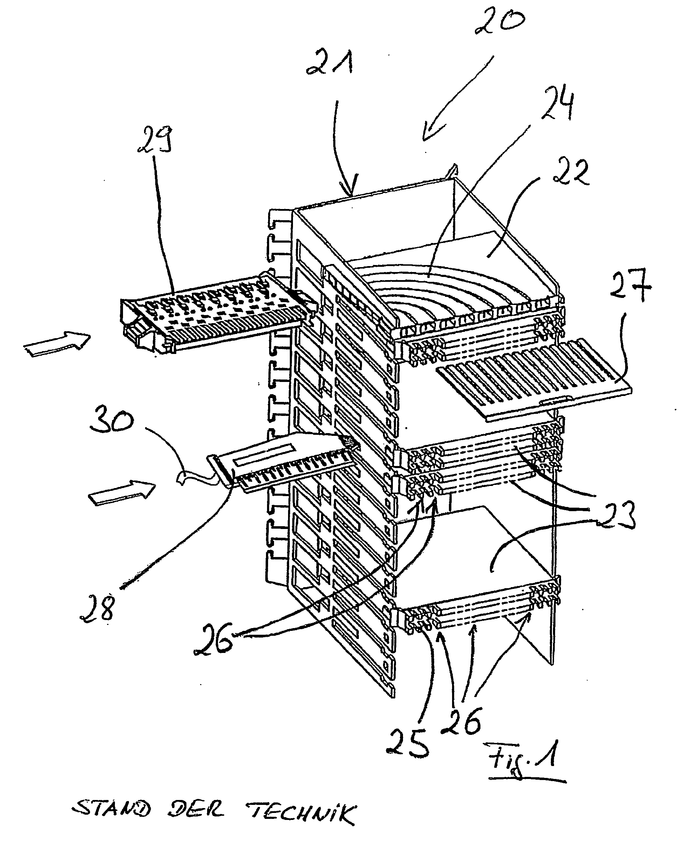

Fig. 1 zeigt eine erste als Verteilerblock 20 ausgebildete Verteilereinrichtung nach dem Stand der Technik, nämlich im Sinne der vorveröffentlichten DE 199 12 522 C2. Der Verteilerblock 20 gemäß Fig. 1 verfügt über ein Trägerteil 21, wobei im Trägerteil 21 scheibenartige Drahtführungen 22 und Verteilerleisten 23, die auch als Kontaktleisten bezeichnet werden, sandwichartig übereinander angeordnet sind. Das Trägerteil 21 wird auch als Aufnahmewanne bezeichnet. Die Drahtführungen 22 weisen bogenförmig gekrümmte Drahtführungskanäle 24 auf, in welchen ankommende und abgehende Leitungen geführt werden können. Die Verteilerleisten 23 sind an einer Vorderseite mit Schneidklemmen 25 versehen, in deren Klemmschlitze die ankommenden und abgehenden Leitungen mit Hilfe eines Werkzeuges von vorne kontaktgebend eingedrückt werden können.

Jede Verteilerleiste 23 ist aus mehreren Verteilerelementen bzw. Kontaktelementen 26 gebildet, wobei die Schneidklemmen 25 an den Kontaktelementen 26 angreifen. Im Inneren tragen die Kontaktelemente 26 Kontaktfedern. Je nach dem ob die Kontaktfedern der Kontaktelemente 26 aneinander liegen oder voneinander getrennt sind, bezeichnet man die Kontaktelemente als Trennelement oder Schaltelement. Insbesondere dann, wenn der Verteilerblock 20 aus Verteilerleisten 23 gebildet ist, deren Kontaktelement 26 als Trennelemente ausgebildet sind, so ist von der Vorderseite des Verteilerblocks 20 her ein Trennstecker 27 einschiebbar, um die Trennelemente im Bedarfsfall unterbrechen zu können.

Ebenso zeigt Fig. 1 einen Kabelstecker 28, der von der Seite her in das Trägerteil 21 des Verteilerblocks 20 einschiebbar ist. Im Bedarfsfall kann ein derartiger Kabelstecker 28, an welchem ein vorkonfektioniertes Kabel 30 angreift, jede der Verteilerleisten 23 zugeordnet werden, um die Kontaktelemente 26 der entsprechenden Verteilerleisten 23 zum Beispiel mit einer Verteilerleiste eines anderen Verteilerblocks zu verbinden.

Weiterhin zeigt Fig. 1 eine seitlich in das Trägerteil 21 bzw. die Aufnahmewanne einschiebbare Schutzeinrichtung, ein sogenanntes Schutzmagazin 29. Dieses Schutzmagazin 29 wird gemäß Fig. 1 in einen hinteren Abschnitt des Trägerteils 21 seitlich eingeschoben und dann von hinten in die jeweilige Verteilerleiste 23 eingesteckt, also an einer den Schneidklemmen 25 gegenüberliegenden Rückseite der Verteilerleiste 23. Nach diesem Stand der Technik ist jeder Verteilerleiste 23 ein Schutzmagazin 29 zugeordnet, um die Kontaktelemente 26 der Verteilerleiste 23 vor Überstrom und/oder Überspannung zu schützen. Der Kontakt zum Erdpotential bzw. Massepotential ergibt sich automatisch dadurch, dass das im hinteren Bereich des Verteilerblocks 20 angeordnete Schutzmagazin 29 an dem Trägerteil 21 bzw. der Aufnahmewanne zur Anlage kommt und das Trägerteil 21 als solches geerdet ist.

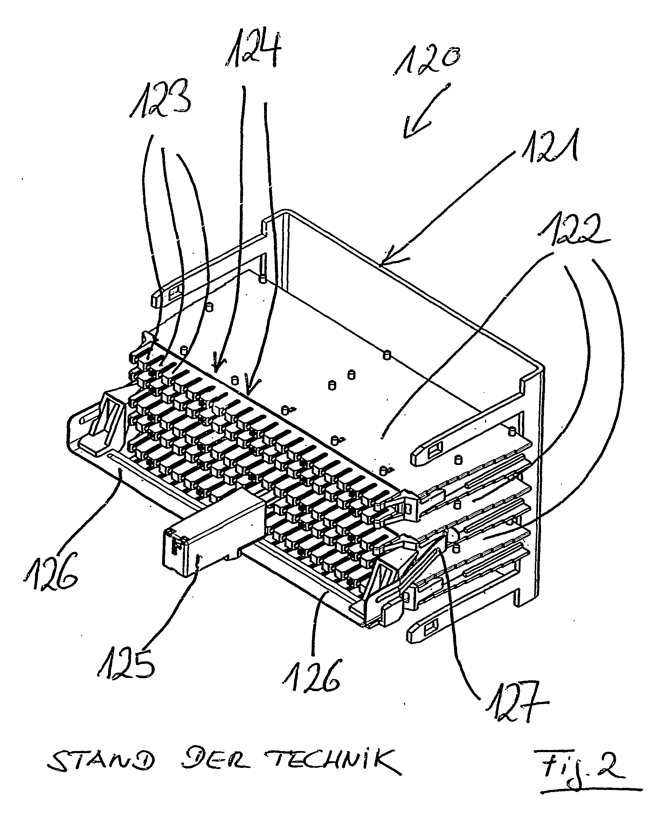

Der in Fig. 1 dargestellte Verteilerblock 20 mit dem von hinten in die Verteilerleisten 23 einschiebbaren Schutzmagazine 29 wird vorzugsweise dann eingesetzt, wenn die Platzverhältnisse, unter denen die Verteilereinrichtung im Feld installiert werden soll, eine solche Konstruktion zulassen. Sind hingegen die Platzverhältnisse beengt, so ist es aus dem Stand der Technik bereits bekannt, Schutzeinrichtungen von vorne in eine Verteilereinrichtung einzustecken. So zeigt Fig. 2 eine zweite als Verteilerblock 120 ausgebildete Verteilereinrichtung nach dem Stand der Technik. Der Verteilerblock 20 gemäß Fig. 2 ist in der nicht-vorveröffentlichten DE 101 20 720 gezeigt. So verfügt auch der Verteilerblock 120 über eine Aufnahmewanne bzw. ein Trägerteil 121, wobei im Trägerteil 121 wiederum mehrere Verteilerleisten 122 sandwichartig übereinander angeordnet sind. Die Verteilerleisten 122 verfügen an Vorderseiten wiederum über Schneidklemmen 123, in deren Klemmschlitze ankommende und abgehende Leitungen kontaktgebend eingedrückt werden können. Jede der Verteilerleisten 122 ist wiederum aus mehreren Verteilerelementen bzw. Kontaktelementen 124 gebildet, wobei die Schneidklemmen 123 an den Kontaktelementen 124 angreifen.

Wie Fig. 2 zeigt, ist in den Verteilerblock 120 eine Schutzeinrichtung 125 von vorne einschiebbar. Bei der Schutzeinrichtung 125 gemäß Fig. 2 handelt es sich um einen sogenannten Einzelschutz, mit dem ein einzelnes Kontaktelement 124 einer Verteilerleiste 122 vor Überstrom und/oder Überspannung geschützt wird. Um die von vorne in das entsprechende Kontaktelement 124 eingeschobene Schutzeinrichtung 125 mit Erdpotential bzw. Massepotential zu verbinden, wird beim Stand der Technik gemäß Fig. 2 eine Erdungsschiene 126 eingesetzt. Die Erdungsschiene 126 ist von vorne auf den Verteilerblock 120 aufgesetzt und über seitliche Bügel 127 mit dem Trägerteil 121 des Verteilerblocks 120 verbunden. Das Trägerteil 121 als solches ist wiederum geerdet. Auf die Erdungsschiene 126 ist die Schutzeinrichtung 125 zur Herstellung des Kontakts mit dem Massepotential aufschiebbar. Die Erdungsschiene 126 ist jedoch bei Rangierarbeiten an ankommenden bzw. abgehenden Leitung hinderlich.

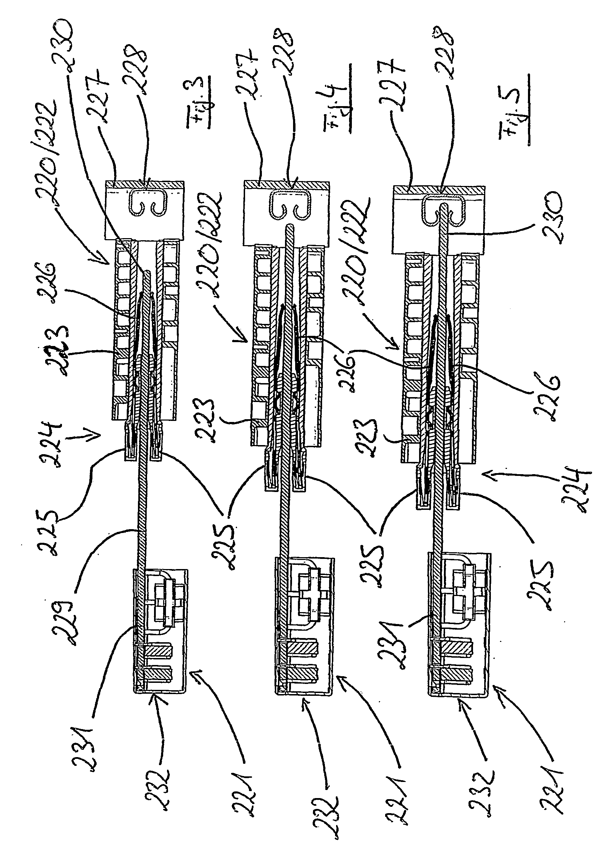

Fig. 3 bis 5 zeigen einen Ausschnitt aus einer erfindungsgemäßen Verteilereinrichtung 220 im Zusammenhang mit einer erfindungsgemäßen Schutzeinrichtung 221 im Querschnitt, wobei sich Fig. 3 bis 5 dadurch unterscheiden, dass die Schutzeinrichtung 221 jeweils unterschiedlich tief in die Verteilereinrichtung 220 eingeschoben ist. In Fig. 3 bis 5 ist ein Schnitt durch lediglich eine Verteilerleiste 222 der Verteilereinrichtung 220 gezeigt. Es ist selbstverständlich, dass auch bei der erfindungsgemäßen Verteilereinrichtung 220 mehrere solcher Verteilerleisten 222 sandwichartig übereinander in einer Aufnahmewanne bzw. einem Trägerteil angeordnet sein können. Bedingt dadurch, dass Fig. 3 bis 5 jedoch lediglich einen Querschnitt durch eine Verteilerleiste 222 zeigen, ist in Fig. 3 bis 5 auch lediglich ein Kontaktelement 223 der entsprechenden Verteilerleiste 222 zu sehen.

Wie Fig. 3 bis 5 entnommen werden kann, sind an einer Vorderseite 224 der Verteilerleiste 222 bzw. des Kontaktelements 223 wiederum Schneidklemmen 225 angeordnet, in deren Klemmschlitze die ankommenden und abgehenden Leitungen kontaktgebend eingedrückt werden können. Im Inneren des Kontaktelements 223 sind Kontaktfedern 226 angeordnet. Die Kontaktfedern 226 stehen mit den Schneidklemmen 225 in Kontakt.

Bedingt durch die in Fig. 3 bis 5 gewählte grafische Darstellung der erfindungsgemäßen Verteilereinrichtung 220 ist in Fig. 3 bis 5 lediglich eine Rückwand 227 der entsprechenden Aufnahmewanne bzw. des entsprechenden Trägerteils gezeigt. Erfindungsgemäß sind an der Rückwand 227 des Trägerteils Erdungseinrichtungen 228 angeordnet. Die Erdungseinrichtungen 228 sind als Kontaktfedern ausgebildet und mit der Rückwand 227 fest verbunden. Eine von der Vorderseite 224 her in das Kontaktelement 226 bzw. die Verteilerleiste 222 einschiebbare Schutzeinrichtung 221 greift im eingeschobenen Zustand (siehe Fig. 5) in die als Kontaktfeder ausgebildete Erdungseinrichtung 228 ein.

Die Schutzeinrichtung 221 verfügt über eine langgestreckte Kontaktzunge 229. Mit einem vorderen Abschnitt 230 der Kontaktzunge 229 durchfährt die Schutzeinrichtung 221 beim Einschieben derselben in das Kontaktelement 223 zuerst die Kontaktfedern 226 des Kontaktelements 223. Nachdem der vordere Abschnitt 230 der Kontaktzunge 229 den Bereich der Kontaktfedern 226 verlassen hat, wird derselbe beim weiteren Einschieben der Schutzeinrichtung 221 letztendlich gemäß Fig. 5 in die Erdungseinrichtung 228 eingeschoben. Die Kontaktzunge 229 weist hierzu eine verlängerte Bauform auf. An einem dem vorderen Abschnitt 230 der Kontaktzunge 229 gegenüberliegenden Abschnitt 231 trägt die Kontaktzunge 229 Baugruppen 232, die der Bereitstellung des Überstromschutzes und/oder Überspannungsschutzes dienen.

An der Rückwand 227 der Aufnahmewanne bzw. des Trägerteils sind mehrere Erdungseinrichtungen 228 angeordnet. Die Anzahl der Erdungseinrichtungen 228 entspricht mindestens der Anzahl an Verteilerleisten 222, die in der Verteilereinrichtung 220 übereinander angeordnet sind. In diesem Fall erstreckt sich die Erdungseinrichtung 228 vorzugsweise über die gesamte Breite einer jeden Verteilerleiste 222. Hierdurch ist sichergestellt, dass die Schutzeinrichtung 221 in jedem Fall in eine Erdungseinrichtung 228 eingeschoben werden kann, und zwar unabhängig davon, in welches Kontaktelement 223 einer Verteilerleiste 222 die Schutzeinrichtung 221 auch eingeschoben werden mag. Demnach sind in diesem Fall im Bereich der Rückwand 227 mehrere Erdungseinrichtungen 228 übereinander angeordnet. Der Abstand der übereinanderangeordneten Erdungseinrichtungen 228 bestimmt sich selbstverständlich nach dem Abstand, mit welchem die Verteilerleisten 222 übereinander positioniert sind.

Alternativ ist auch denkbar, dass an der Rückwand 227 eine Anzahl von Erdungseinrichtungen 228 angeordnet ist, die der Anzahl aller möglichen Kontaktelemente 223 in der Verteilereinrichtung 220 entspricht. Dies würde bedeuten, dass im Bereich einer Verteilerleiste 222 so viele Erdungseinrichtungen 228 angeordnet sind, wie die Verteilerleiste 222 Kontaktelemente 223 aufweist. In diesem Fall wäre jedem einzelnen Kontaktelement 223 eine separate Erdungseinrichtung 228 zugeordnet. Der Abstand von übereinander angeordneten Erdungseinrichtungen 228 entspricht dann wieder dem Abstand, mit welchem die Verteilerleisten 222 übereinander positioniert sind. Der Abstand von nebeneinander angeordneten Erdungseinrichtungen 228 entspricht dann dem Abstand, den die Kontaktelemente innerhalb einer Verteilerleiste 222 zueinander aufweisen.

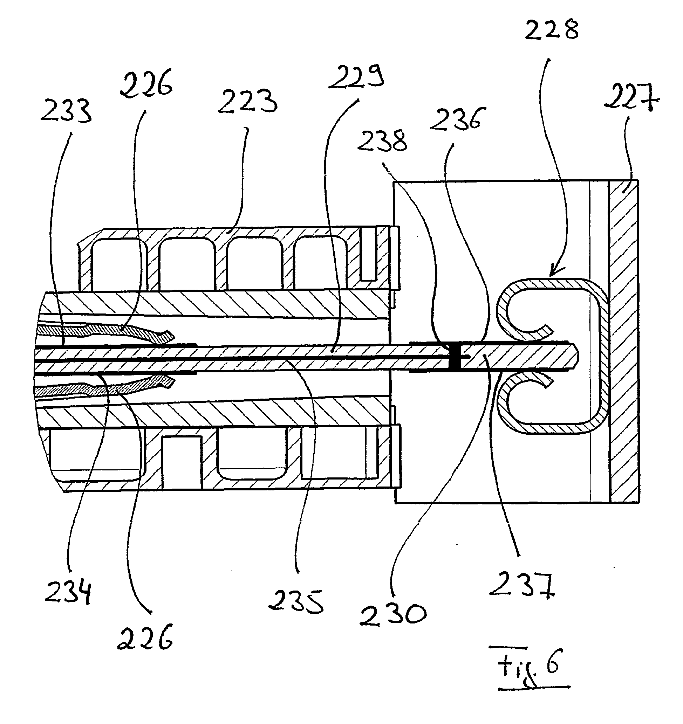

Figur 6 zeigt einen vergrößerten Querschnitt durch die Anordnung der Figur 5, nämlich mit einer in eine Erdungseinrichtung 228 eingeschobenen Kontaktzunge 229, wobei ein vorderer Abschnitt 230 der Kontaktzunge 229 mit der Erdungseinrichtung 228 in Kontakt steht. Die Kontaktzunge 229 ist im Sinne der Erfindung in sogenannter Multilayer-Platinentechnik ausgeführt. Hierzu sind in die Kontaktzunge 229 Leiterbahnen 233, 234 und 235 integriert, wobei die Leiterbahnen 233, 234 und 235 vertikal übereinander angeordnet sind. Eine erste Leiterbahn 233 im Bereich einer Oberseite der Kontaktzunge 229 dient der Kontaktierung der oberen Kontaktfeder 226, eine zweite Leiterbahn 234 im Bereich einer Unterseite der Kontaktzunge 229 dient der Kontaktierung der unteren Kontaktfeder 226. Zwischen den beiden Leiterbahnen 233 und 234 zur Kontaktierung der beiden Kontaktfedern 226 verläuft eine dritte Leiterbahn 235 mit Erdpotential bzw. Massepotential. Die dritte Leiterbahn 235 mit Erdpotential verläuft innerhalb der Kontaktzunge 229, die Leiterbahnen 233 sowie 234 verlaufen auf der Oberseite und Unterseite der Kontaktzunge 229.

Die im Inneren der Kontaktzunge 229 verlaufende dritte Leiterbahn 235 mit Erdpotential steht mit Kontaktflächen 236 und 237 über eine Kontaktbrücke 238 in Kontakt, wobei die Kontaktbrücke 238 eine sogenannte Durchkontaktierung bereitstellt. Die Kontaktflächen 236 und 237 sind wiederum auf der Oberseite und Unterseite der Kontaktzunge 229, nämlich im Bereich des Abschnitts 230 angeordnet. Die Schutzeinrichtung 221 kontaktiert die Erdungseinrichtung 228 über die Kontaktflächen 236 und 237 im Bereich des vorderen Abschnitts 230 der Kontaktzunge 229.

Durch die Ausführung der Kontaktzunge 229 in Multilayer-Platinentechnik können die drei Leiterbahnen 233, 234 und 235 besonders platzsparend übereinander angeordnet werden. Rein theoretisch wäre es selbstverständlich auch möglich, die Leiterbahn 235 mit dem Erdpotential auch auf der Oberseite oder der Unterseite der Kontaktzunge 229 anzuordnen, dies würde jedoch eine breitere Ausführung der Kontaktzunge 229 erforderlich machen.

Im Sinne der Erfindung kann demnach bei einer Verteilereinrichtung, die unter beengten Platzverhältnissen im Feld montiert werden muss, auf einfache Art und Weise eine Schutzeinrichtung von vorne in ein Kontaktelement 223 bzw. mehrere oder auch alle Kontaktelemente 223 einer Verteilerleiste 222 eingeschoben werden. Beim vollständigen Einschieben der Schutzeinrichtung in das Kontaktelement 223 wird ein vorderer Abschnitt 230 der Schutzeinrichtung 221 in die der Rückwand 227 der Aufnahmewanne zugeordneten Erdungseinrichtungen 228 eingeschoben und so eine Erdung der Schutzeinrichtung 221 bewerkstelligt.

An dieser Stelle soll darauf hingewiesen werden, dass die erfindungsgemäße Schutzeinrichtung 221 sowohl als Einzelschutz für ein einzelnes Kontaktelement 223 als auch als Mehrfachschutz für mehrere Kontaktelemente 223 einer Verteilerleiste 222 ausgebildet sein kann. In dem Fall, in dem die erfindungsgemäße Schutzeinrichtung 221 als Mehrfachschutz ausgebildet ist, ist diese vorzugsweise in zwei oder vier Kontaktelemente 223 einer Verteilerleiste 222 einschiebbar. Es ist jedoch auch denkbar, dass die Schutzeinrichtung 221 alle Kontaktelemente 223 einer Verteilerleiste 222 gleichzeitig vor Überspannung und/oder Überstrom schützt.

### Bezugszeichenliste

- 20: Verteilerblock
- 21: Trägerteil
- 22: Drahtführung
- 23: Verteilerleiste
- 24: Drahtführungskanal
- 25: Schneidklemme
- 26: Kontaktelement
- 27: Trennstecker
- 28: Kabelstecker
- 29: Schutzmagazin
- 30: Kabel

- 120: Verteilerblock
- 121: Trägerteil
- 122: Verteilerleiste
- 123: Schneidklemme
- 124: Kontaktelement
- 125: Schutzeinrichtung
- 126: Erdungsschiene
- 127: Bügel

- 220: Verteilereinrichtung
- 221: Schutzeinrichtung
- 222: Verteilerleiste
- 223: Kontaktelement
- 224: Vorderseite
- 225: Schneidklemme
- 226: Kontaktfeder
- 227: Rückwand
- 228: Erdungseinrichtung
- 229: Kontaktzunge
- 230: Abschnitt
- 231: Abschnitt
- 232: Baugruppe
- 233: Leiterbahn
- 234: Leiterbahn
- 235: Leiterbahn
- 236: Kontaktfläche
- 237: Kontaktfläche
- 238: Kontaktbrücke

## Patentansprüche

1. Verteilereinrichtung einer Telekommunikationsanlage, mit einem Trägerteil und mehreren in dem Trägerteil übereinander angeordneten Verteilerleisten (222), wobei das Trägerteil eine Rückwand (227) aufweist, wobei jede Verteilerleiste (222) mehrere Kontaktelemente (223) mit Kontaktfedern (226) aufweist, und wobei die Verteilerleisten (222) derart in dem Trägerteil angeordnet sind, dass Schneidklemmen (225) der Verteilerleisten (222), die mit den Kontaktfedern (226) in Kontakt stehen, an einer der Rückwand (227) gegenüberliegenden Vorderseite (224) des Trägerteils zugänglich sind, **dadurch gekennzeichnet, dass** an der Rückwand (227) des Trägerteils mindestens eine Erdungseinrichtung (228) angeordnet ist, wobei eine Schutzeinrichtung (221) in ein oder mehrere Kontaktelemente (223) der Verteilerleiste (222) von der Vorderseite (224) her derart einschiebbar ist, dass ein vorderer Abschnitt (230) einer Kontaktzunge (229) der Schutzeinrichtung (221) beim Einschieben zuerst die Kontaktfedern (226) des oder jeden Kontaktelements (223) durchfährt und nach dem Einschieben in das oder jedes Kontaktelement (223) in mindestens eine auf der Rückwand (227) des Trägerteils angeordnete Erdungseinrichtung (228) eingreift.

2. Verteilereinrichtung nach Anspruch 1, **dadurch gekennzeichnet, dass** an der Rückwand (227) des Trägerteils mehrere Erdungseinrichtungen (228) angeordnet sind.

3. Verteilereinrichtung nach Anspruch 1 oder 2, **dadurch gekennzeichnet, dass** im Bereich jeder Verteilerleiste (222) eine Erdungseinrichtung (228) angeordnet ist, die sich vorzugsweise über die gesamte Breite der jeweiligen Verteilerleiste (222) erstreckt.

4. Verteilereinrichtung nach Anspruch 1 oder 2, **dadurch gekennzeichnet, dass** die Anzahl der im Bereich einer Verteilerleiste (222) an der Rückwand (227) angeordneten Erdungseinrichtungen (228) der Anzahl der Kontaktelemente (223) in der jeweiligen Verteilerleiste (222) entspricht.

5. Verteilereinrichtung nach einem oder mehreren der Ansprüche 1 bis 4, **dadurch gekennzeichnet, dass** die Erdungseinrichtungen (229) als Kontaktfedern ausgebildet sind, die mit der Rückwand (227) des Trägerteils fest verbunden sind.

6. Verteilereinrichtung nach einem oder mehreren der Ansprüche 1 bis 5, **dadurch gekennzeichnet, dass** die Kontaktzunge (229) der Schutzeinrichtung (221) in Multilayer-Platinentechnik ausgeführt ist, derart, dass Leiterbahnen (233, 234, 235) für die Kontaktierung der Kontaktfedern (226) und für die Kontaktierung der Erdungseinrichtungen (228) in Form übereinander angeordneter Lagen in die Kontaktzunge (229) integriert sind.

## Claims

1. Distribution device of a telecommunications installation, having a support part and a plurality of distribution strips (222) which are arranged one on top of the other in the support part, with the support part having a rear wall (227), with each distribution strip (222) having a plurality of contact elements (223) with contact springs (226), and with the distribution strips (222) being arranged in the support part such that insulation-displacement terminals (225) of the distribution strips (222), which make contact with the contact springs (226), are accessible on a front face (224) of the support part, which front face (224) is opposite the rear wall (227), **characterized in that** at least one earthing device (228) is arranged on the rear wall (227) of the support part, in which case a protection device (221) can be inserted into one or more contact elements (223) on the distribution strip (222) from the front face (224) such that a front section (230) of a contact tongue (229) of the protection device (221) first of all moves through the contact springs (226) of the or each contact element (223) during insertion and, after insertion, engages in the or each contact element (223) in at least one earthing device (228), which is arranged on the rear wall (227) of the support part.

2. Distribution device according to Claim 1, **characterized in that** a plurality of earthing devices (228) are arranged on the rear wall (227) of the support part.

3. Distribution device according to Claim 1 or 2, **characterized in that** an earthing device (228) is arranged in the area of each distribution strip (222) and preferably extends over the entire width of the respective distribution strip (222).

4. Distribution device according to Claim 1 or 2, **characterized in that** the number of earthing devices (228) which are arranged in the area of a distribution strip (222) on the rear wall (227) corresponds to the number of contact elements (223) in the respective distribution strip (222).

5. Distribution device according to one or more of Claims 1 to 4, **characterized in that** the earthing devices (229) are in the form of contact springs which are firmly connected to the rear wall (227) of the support part.

6. Distribution device according to one or more of Claims 1 to 5, **characterized in that** the contact tongue (229) of the protection device (221) is designed using multilayer board technology, such that conductor tracks (233, 234, 235) for making contact with the contact springs (226) and for making contact with the earthing devices (228) are integrated in the contact tongue (229), in the form of layers which are arranged one on top of the other.

## Revendications

1. Dispositif de distribution d'une installation de télécommunication comprenant une partie de support et une pluralité de barres de distribution (222) disposées les unes sur les autres dans la partie de support, dans lequel la partie de support présente une paroi arrière (227), chaque barre de distribution (222) présentant une pluralité d'éléments de contact (223) pourvus de ressorts de contact (226), et les barres de distribution (222) étant disposées dans la partie de support de manière à ce que des contacts auto-dénudants (225) soient accessibles aux barres de distribution (222) qui sont en contact avec les ressorts de contact (226), sur une face avant (224) de la partie de support qui est opposée à la paroi arrière (227), **caractérisé en ce qu'**au moins un dispositif de mise à la terre (228) est disposé sur la paroi arrière (227) de la partie de support, un dispositif de protection (221) pouvant être inséré dans un ou plusieurs éléments de contacts (223) de la barre de distribution (222) depuis la face avant (224) de telle manière qu'une section avant (230) d'une patte de contact (229) du dispositif de protection (221) passe tout d'abord, lors de l'insertion, à travers les ressorts de contact (226) du ou de chaque élément de contact (223) et, après insertion dans le ou chaque élément de contact (223), s'engage dans au moins un dispositif de mise à la terre (228) disposé sur la paroi arrière (227) de la partie de support.

2. Dispositif de distribution selon la revendication 1, **caractérisé en ce qu'**une pluralité de dispositifs de mise à la terre (228) sont disposés sur la paroi arrière (227) de la partie de support.

3. Dispositif de distribution selon la revendication 1 ou 2, **caractérisé en ce que**, dans la région de chaque barre de distribution (222), est disposé un dispositif de mise à la terre (228) qui s'étend de préférence sur la totalité de la largeur de la barre de distribution respective (222).

4. Dispositif de distribution selon la revendication 1 ou 2, **caractérisé en ce que** le nombre de dispositifs de mise à la terre (228) disposés dans la région d'une barre de distribution (222) sur la paroi arrière (227) correspond au nombre d'éléments de contact (223) de la barre de distribution respective (222).

5. Dispositif de distribution selon l'une ou plusieurs des revendications 1 à 4, **caractérisé en ce que** les dispositifs de mise à la terre (229) sont conçus sous la forme de ressorts de contact qui sont fermement reliés à la paroi arrière (227) de la partie de support.

6. Dispositif de distribution selon l'une ou plusieurs des revendications 1 à 5, **caractérisé en ce que** la patte de contact (229) du dispositif de protection (221) est réalisée par la technique de platine multicouche de telle manière que des pistes conductrices (233, 234, 235) destinées à la mise en contact des ressorts de contact (226) et à la mise en contact des dispositifs de mise à la terre (228) soient intégrées à la patte de contact (229) sous la forme de couches superposées les unes aux autres.
